(19) Europäisches Patentamt
European Patent Office
Office européen des brevets

(11) **EP 2 131 288 A1**

(12) **EUROPEAN PATENT APPLICATION**

(43) Date of publication:
**09.12.2009 Bulletin 2009/50**

(51) Int Cl.:
***G06F 15/02*** (2006.01)        ***G06T 11/20*** (2006.01)
***G06F 3/048*** (2006.01)

(21) Application number: **09161884.3**

(22) Date of filing: **04.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **05.06.2008   JP 2008148280**

(71) Applicant: **Casio Computer Co., Ltd.
Tokyo 151-8543 (JP)**

(72) Inventor: **Kaneko, Ryo
Hamura-shi
Tokyo (JP)**

(74) Representative: **Grünecker, Kinkeldey,
Stockmair & Schwanhäusser
Anwaltssozietät
Leopoldstrasse 4
80802 München (DE)**

(54) **Graphing calculator having touchscreen display unit**

(57)     A graphing calculator includes: a touchscreen display unit having a formula display area and a graph display area; a formula input section configured to receive a calculation formula; a formula display control section configured to control the touchscreen display unit to display the calculation formula in the formula display area; a formula drag determining section configured to determine whether the calculation formula is dragged to the graph display area; a function calculating section configured to perform a calculation corresponding to a type of a function included in the calculation formula; a range setting section configured to set coordinate ranges to be used for generating a graph image; and a graph display control section configured to generate a graph image corresponding to the calculation formula and the calculation result according to the coordinate ranges.

## FIG. 1

**Description**

CROSS-REFERENCE TO THE RELATED APPLICATION(S)

The present application is based upon and claims priority from prior Japanese Patent Application No. 2008-148280, filed on June 5, 2008, the entire content of which are incorporated herein by reference.

TECHNICAL FIELD

The present invention relates to a graphing calculator, which performs a solving calculation for a function formula (any of various ones) that is input by a user and graphically displays a calculation result.

BACKGROUND

Conventionally, portable calculators are widely used, which are called graphical scientific calculators that perform a solving calculation for a function formula that is input arbitrarily (any of various ones), display a calculation result, and graphically display the input function formula.

Such graphical scientific calculators are used in educational fields such as in classrooms. For example, calculation methods of various function formulae, loci of their graphical representations, etc. are learned through the use of the graphical scientific calculators.

Graphical scientific calculators have been developed, which are equipped with a touchscreen display and has, as divisional areas, a formula display area for inputting and displaying a formula and a graph display area in which a graph of the input formula is shown, and which can easily display a graphical representation of a function formula by touching the function formula being displayed in the formula display area with a stylus, dragging it, and dropping it into the graph display area. Examples of such calculators are disclosed in JP-A-2004-126679 and in JP-A-2004-126769.

Among the above conventional graphical scientific calculators are one which calculates and displays a solution of a problem involving an input function formula and one which merely draws and displays a graph corresponding to an input function formula. However, there is no graphical scientific calculator which draws and displays a graph that allows the user to visually understand a solving calculation process for a function formula and a calculation result. Graphical scientific calculators having functions that are more suitable for learning are desired.

SUMMARY

One of objects of the present invention is to provide a graphing calculator which can draw and display a graph that allows a user to visually understand a solving calculation process for an arbitrary function formula and a calculation result, by a very simple operation.

According to an aspect of the invention, there is provided a graphing calculator including: a touchscreen display unit having a formula display area and a graph display area; a formula input section configured to receive a calculation formula including a function, the calculation formula being input by a user; a formula display control section configured to control the touchscreen display unit to display the calculation formula input to the formula input section in the formula display area; a formula drag determining section configured to determine whether the calculation formula displayed in the formula display area is dragged to the graph display area according to a user operation input to the touchscreen display unit; a function calculating section configured to perform a calculation corresponding to a type of the function included in the calculation formula when the formula drag determining section determines that the calculation formula is dragged to the graph display area; a range setting section configured to set coordinate ranges to be used for generating a graph image corresponding to the calculation formula and a calculation result obtained by the function calculating section; and a graph display control section configured to generate a graph image corresponding to the calculation formula and the calculation result according to the coordinate ranges set by the range setting section and to control the touchscreen display unit to display the graph image in the graph display area.

According to another aspect of the invention, there is provided a graphing calculator including: a touchscreen display unit configured to receive a touch operation input by a user, the touchscreen display having a formula display area and a graph display area; a user interface configured to receive a calculation formula including a function, the calculation formula being input by the user; a memory device configured to store instructions and data for performing a calculation for displaying a graph image of the calculation formula; and a processor configured to: control the touchscreen display unit to display the calculation formula in the formula display area; perform the calculation in accordance with a type of the function included in the calculation formula; set coordinate ranges to be used for generating a graph image of the calculation formula; generate the graph image of the calculation formula based on the calculation and the coordinate ranges; and control the touchscreen display unit to display the graph image in the graph display area when the calculation formula displayed in the formula display area is dragged and dropped into the graph display area by the touch operation.

BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.

Fig. 1 is a plan view showing an appearance of a graphical scientific calculator shown as an embodiment of a graphing calculator according to the present invention.

Fig. 2 is a block diagram showing a configuration of an electronic circuit of the graphical scientific calculator.

Fig. 3 is a flowchart of a formula input process of the graphical scientific calculator.

Fig. 4 is a flowchart of a graph forming process of the graphical scientific calculator which is executed after a formula has been input and displayed in a formula display area.

Fig. 5 is a flowchart of a linked process of solving calculation and graph drawing which is part of the graph forming process of the graphical scientific calculator and is executed according to a function included in a formula.

Figs. 6A and 6B show a linked display operation for the formula display area and a graph display area which is performed as part of graph forming processing when a system of simultaneous equations having a solution is input to the graphical scientific calculator.

Figs. 7A and 7B show a linked display operation for the formula display area and the graph display area which is performed as part of graph forming processing when a system of simultaneous equations having no solution is input to the graphical scientific calculator.

Figs. 8A and 8B show a linked display operation for the formula display area and the graph display area which is performed as part of graph forming processing when a high-order equation having a solution is input to the graphical scientific calculator.

Figs. 9A and 9B show a linked display operation for the formula display area and the graph display area which is performed as part of graph forming processing when a high-order equation having no solution is input to the graphical scientific calculator.

Figs. 10A and 10B show a linked display operation for the formula display area and the graph display area which is performed as part of graph forming processing when an integration function having a solution is input to the graphical scientific calculator.

Figs. 11A and 11B show a linked display operation for the formula display area and the graph display area which is performed as part of graph forming processing when an integration function having no solution is input to the graphical scientific calculator.

Figs. 12A and 12B show a linked display operation for the formula display area and the graph display area which is performed as part of graph forming processing when a differentiation function having a solution is input to the graphical scientific calculator.

DETAILED DESCRIPTION

An embodiment according to the present invention will be described in detail with reference to the accompanying drawings. The scope of the claimed invention should not be limited to the examples illustrated in the drawings and those described in below.

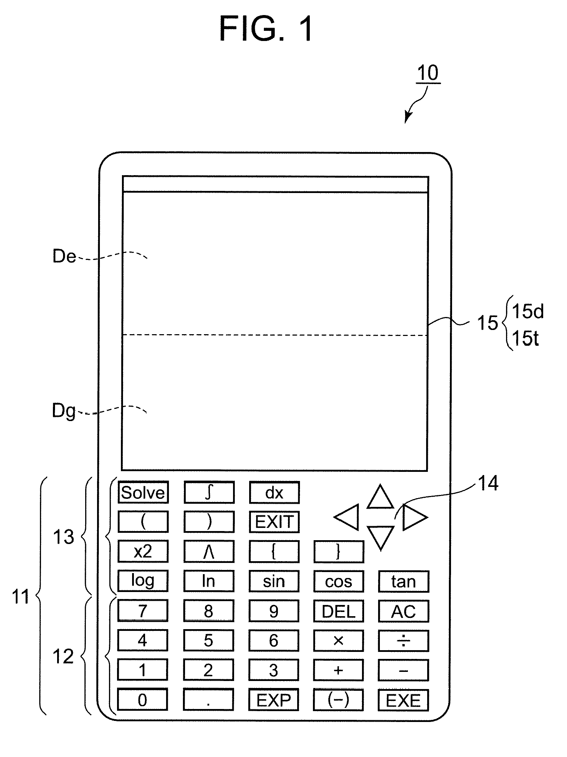

Fig. 1 is a plan view showing an appearance of a graphical scientific calculator 10 shown as embodiment of a graphing calculator according to the invention.

Since portability is required to the graphical scientific calculator 10, the graphical scientific calculator 10 is formed in a small size capable for a user to easily hold with one hand while operating the graphical scientific calculator 10 with the other hand. A user interface 11 and a touchscreen display unit 15 are provided on a front face of a main body of the graphical scientific calculator 10.

The user interface 11 is provided with a numeral/character/operation symbol key group 12 for inputting numbers, characters, and arithmetic symbols and inputting an instruction to perform a calculation, a function command key group 13 for inputting various function commands, and cursor keys 14 for performing a operation of moving a cursor Cu that is displayed on the touchscreen display unit 15, a operation of selecting a data item, and other manipulations.

Arranged as the numeral/character/operation symbol key group 12 includes "0" to "9" keys (numeral keys), "+," "-," "×," and "÷" keys (arithmetic symbol keys), an "EXP" key (exponential key), a "DEL" key (delete key), an "EXE" key (execute key), and an "AC" key (clear key).

The function command key group 13 includes a "Solve" (function command for an equation) key, a "∫" (integration function command) key, a "dx" (differentiation function command) key, an "$x^2$" (quadratic function command) key, a "^" (n-th power function command) key, and a "log" (logarithm function command) key.

The touchscreen display unit 15 is configured by laying a transparent touchscreen panel 15t on a dot-matrix liquid crystal display 15d. When processing of performing a solving calculation for a user-input function formula, an approximately top half of the touchscreen display unit 15 operates as a formula display area De and an approximately bottom half of it operates as a graph display area Dg.

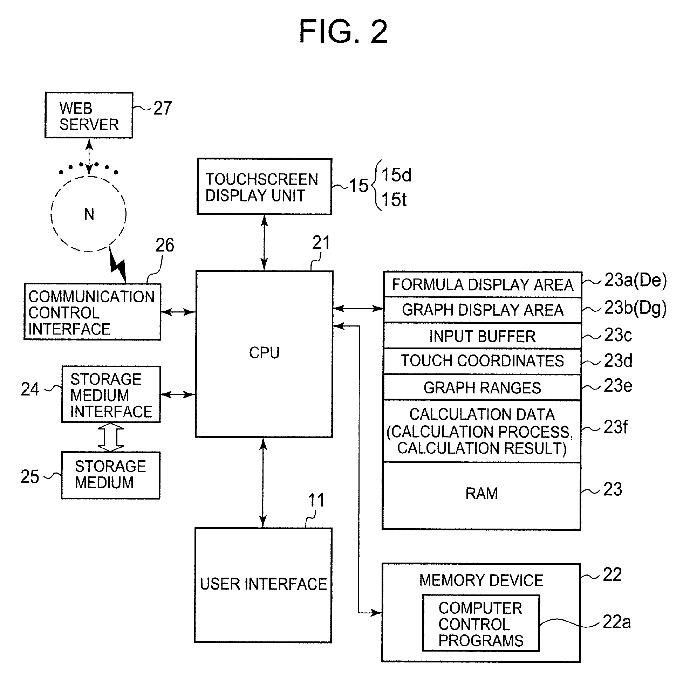

Fig. 2 is a block diagram showing a configuration of an electronic circuit of the graphical scientific calculator 10.

The graphical scientific calculator 10 is equipped with a processor (CPU) 21.

The processor (CPU) 21 controls the components provided in the graphical scientific calculator 10 by using a RAM 23 as a work storage area by activating computer control programs 22a stored in advance in a memory device 22 such as a flash ROM according to input data that is input through the user interface 11 or the touchscreen display unit 15, reading computer control programs 22a stored in advance in an external storage medium (e.g., a memory card) 25 inserted in a recording medium interface 24 into the memory device 22 and activating them according to input data, or reading, into the memory device 22, computer control programs 22a received from a Web server 27 (in this case, a program server) on a communication network N via a communication interface 26 and activating them according to input data.

Connected to the processor (CPU) 21 are the user interface 11, the memory device (ROM) 22, the RAM 23, the recording medium interface 24, and the communication interface 26 as well as the touchscreen display unit 15 in which the formula display area De and the graph display area Dg are set in a divisional manner when necessary.

The memory device 22 is stored in advance with a system program which controls the entire processing of the electronic circuit of the graphical scientific calculator 10. The memory device 22 is also stored, as computer control programs 22a, with programs for performing formula calculation processing and graph drawing processing according to inputs through the user interface 11 or the touchscreen display unit 15, a touch position detection program for detecting a touched position (coordinates) on the transparent touchscreen panel 15t of the touchscreen display unit 15, and other programs.

The following and other memory areas are allocated in the RAM 23. A formula display area memory 23a is to store display data of a function formula to be displayed in the formula display area De which is set in the touchscreen display unit 15 in a divisional manner. A graph display area memory 23b is to store display data of a graph to be displayed in the graph display area Dg which is set in the touchscreen display unit 15 in a divisional manner. An input buffer memory 23c is to sequentially store key input data such as a function formula that are input through the user interface 11. A touch coordinates memory 23d is to temporarily store consecutive sets of coordinates (from start point coordinates to end point coordinates) of touch positions detected according to the above-mentioned touch position detection program as a touch operation is performed on the touchscreen panel 15t. A graph range memory 23e is to set and store coordinate ranges on an X axis and a Y axis to be used for drawing and displaying a graph in the graph display area Dg (23b). A calculation data memory 23f is to sequentially store calculation process data, calculation result data, etc. that are produced as processing of performing a solving calculation for a function formula that has been input and displayed in the formula display area De (23a) is performed.

Next, an example of an operation of the graphical scientific calculator 10 having the above configuration will be described.

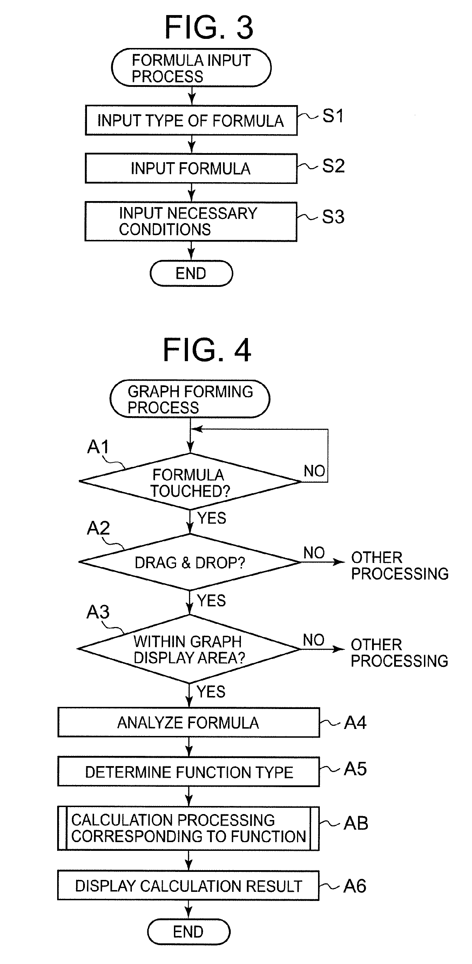

Fig. 3 is a flowchart of a formula input process of the graphical scientific calculator 10.

For the user to input a desired function formula through the user interface 11 and have it displayed in the formula display area De (23a) of the touchscreen display unit 15, first, at step S1, the user inputs a function command indicating a type of a function included in a subject of calculation using the function command key group 13.

In the graphical scientific calculator 10 according to the embodiment, for example, the "Solve" key is pressed in the case of inputting an equation (e.g., a system of simultaneous equations or a high-order equation). The "∫" key is pressed in the case of inputting an integration function. The "dx" key is pressed in the case of inputting a differentiation function.

At step S2, the user inputs a desired formula by selectively manipulating the keys of the numeral/character/operation symbol group 12 and the function command key group 13. At step S3, the user inputs necessary conditions such as an unknown to be determined and a calculation interval for the input desired function formula.

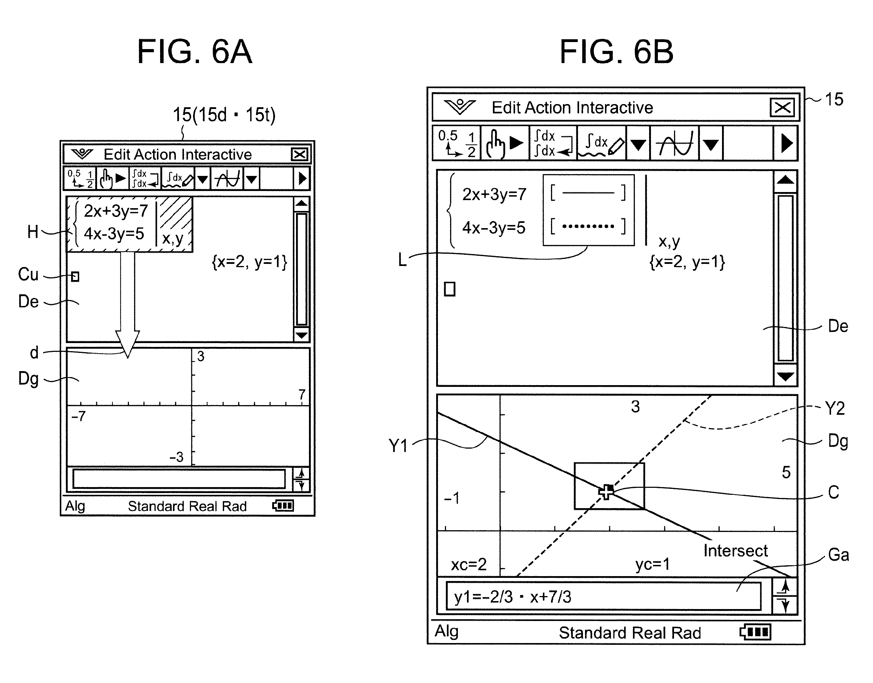

As the input operation proceeds, portions of a user-desired function formula that have been input according to the above formula input process are sequentially stored in the input buffer memory 23c while being written to the formula display area memory 23a in the form of numbers, characters, and symbols and displayed in the formula display area De of the touchscreen display unit 15 (see Figs. 6A-12A).

Fig. 4 is a flowchart of a graph forming process of the graphical scientific calculator 10 which is executed after a formula has been input and displayed in the formula display area De.

When a touch input is detected at the position of a formula being displayed in the formula display area De of the touchscreen display unit 15, the display area of the formula is highlighted in inverse display (indicated as an area shown by symbol H in the figures) (step A1: yes). When a movement from the above touch-input position and a touch cancellation are detected, it is determined that a drag-and-drop operation (indicated by symbol d) has been performed on the highlighted (H) formula (step A2: yes). At step A3, it is determined whether the position where the formula was dropped is within the graph display area Dg.

If it is determined that the position where the formula was dropped after being dragged from the formula display area De is within the graph display area Dg (step A3: yes), the formula is analyzed as a subject of calculation at step A4 and a function type is determined from a function command included in the formula at step A5.

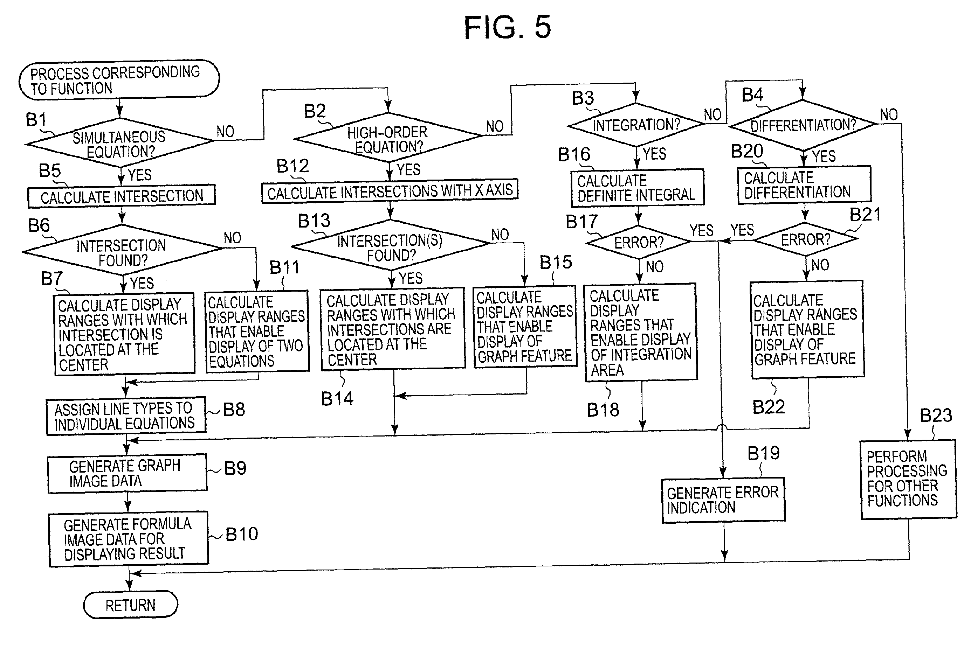

At step AB, calculation processing is performed according to the function type (see Fig. 5).

Fig. 5 is a flowchart of a linked process of solving calculation and graph drawing which is part of the graph forming process of the graphical scientific calculator 10 and is executed according to a function included in a formula.

Figs. 6A and 6B show a linked display operation for the formula display area De and the graph display area Dg which is performed as part of graph forming processing when a system of simultaneous equations having a solution is input to the graphical scientific calculator 10.

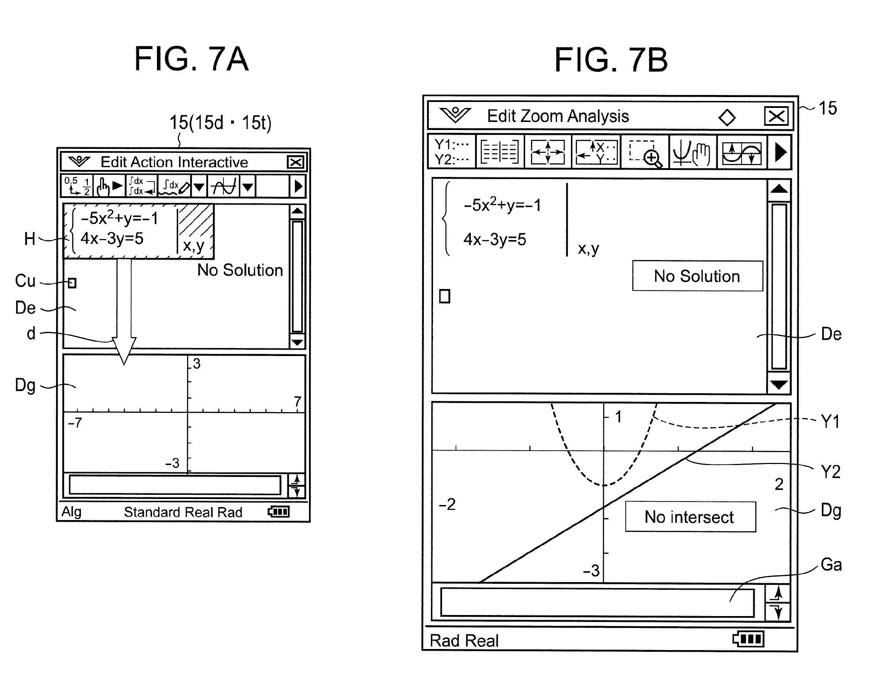

Figs. 7A and 7B show a linked display operation for the formula display area De and the graph display area Dg which is performed as part of graph forming processing when a system of simultaneous equations having no solution is input to the graphical scientific calculator 10.

If a system of simultaneous equations "2x + 3y = 7,4x - 3y = 5, x, y" is input and displayed in the formula display area De of the touchscreen display unit 15 (see Fig. 6A) and the user drag-and-drops (as shown by an arrow "d" in the figures) the simultaneous equations into the graph display area Dg (step B1: yes) by a touch operation and a moving operation, at step B5 an intersection C (x, y) as a solution of the simultaneous equations is calculated.

If an intersection C (x = 2, y =1) of the simultaneous equations is calculated successfully (step B6: yes), at step B7 coordinate ranges Xmin[-1]~Xmax[5] and Ymin[-1]~Ymax[3] with which the coordinates of the intersection C (x = 2, y = 1) are located at the center of the graph display area Dg are calculated and stored in the graph range memory 23e.

At step B8, line types L of a graph are assigned to the individual equations of the simultaneous equations displayed in the formula display area De and are displayed. At step B9, graph data Y1 and Y2 of the individual equations "2x + 3y = 7" and "4x - 3y = 5" are generated according to the coordinate ranges Xmin[-1]~Xmax[5] and Ymin[-1]~Ymax[3] which are stored in the graph range memory 23e. Furthermore, graph image data in which the intersection coordinates "xc = 2, yc = 1" which were calculated at step B5 and an intersection mark C are added are generated and drawn/stored in the graph display area memory 23b.

At step B10, result display formula image data for display of formulae "y1 = -2/3·x + 7/3" and "y2 = 4/3·x - 5/3" of the graph data Y1 and Y2 corresponding to the individual equations that have been obtained in calculating a solution of the simultaneous equations "2x + 3y = 7,4x - 3y = 5" is generated and drawn/stored in a bottom area of the graph display area memory 23b.

At step A6, as shown in Fig. 6B, the graph image data of the graph data Y1 and Y2 of the simultaneous equations and the formula image data Ga of the formulae of the graph data Y1 and Y2 which were generated at steps B9 and B10 and drawn/stored in the graph display area memory 23b are displayed in the graph display area Dg of the touchscreen display unit 15.

On the other hand, if "no solution" occurs, that is, if an intersection C as a solution of the simultaneous equations is not found (step B5, steps B6: no) when a system of simultaneous equations "-5x2 + y = 1,4x - 3y = 5, x, y" (see Fig. 7A) has been input and displayed and drag-and-dropped (as shown by an arrow "d") into the graph display area Dg by a touch operation and a movement operation made by the user (step B1: yes), at step B11 coordinate ranges Xmin[-2]~Xmax[2] and Ymin[-3]~Ymax[1] with which the graph data Y1 and Y2 of the individual equations can be displayed in the graph display area Dg are calculated and stored in the graph range memory 23e.

Then, step B8 for assigning line types to the individual equations, step B9 for generating graph image data of the graph data Y1 and Y2 of the individual equations, and step B 10 for generating formula image data for display of a result (in this case, no formula image data are generated actually because there is no solution) are executed sequentially in the same manner as described above. At step A6, as shown in Fig. 7B, the graph image data of the graph data Y1 and Y2 of the simultaneous equations "-5x2 + y =1, 4x - 3y = 5" having no solution are displayed in the graph display area Dg together with a message "No Intersection."

With the above procedure, the user can visually understand the mechanism of simultaneous equation calculation merely by a very simple operation of drag-and-dropping (as shown by an arrow "d") a user-input, desired simultaneous equation displayed in the formula display area De into the graph display area Dg in each of a case that the simultaneous equations has solution and a case that the simultaneous equations has no solution.

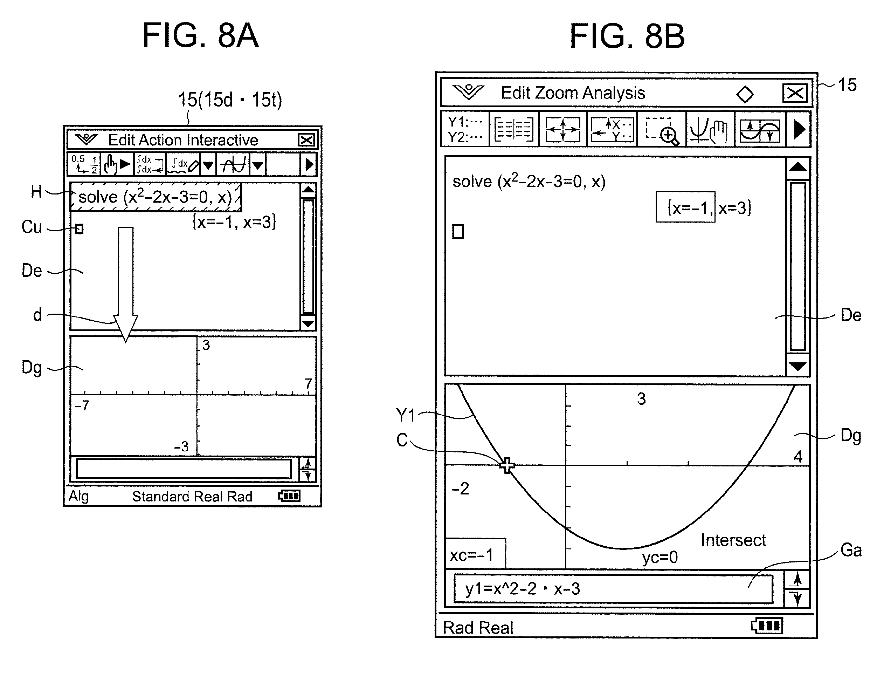

Figs. 8A and 8B show a linked display operation for the formula display are a De and the graph display area Dg which is performed as part of graph forming processing when a high-order equation having a solution is input to the graphical scientific calculator 10.

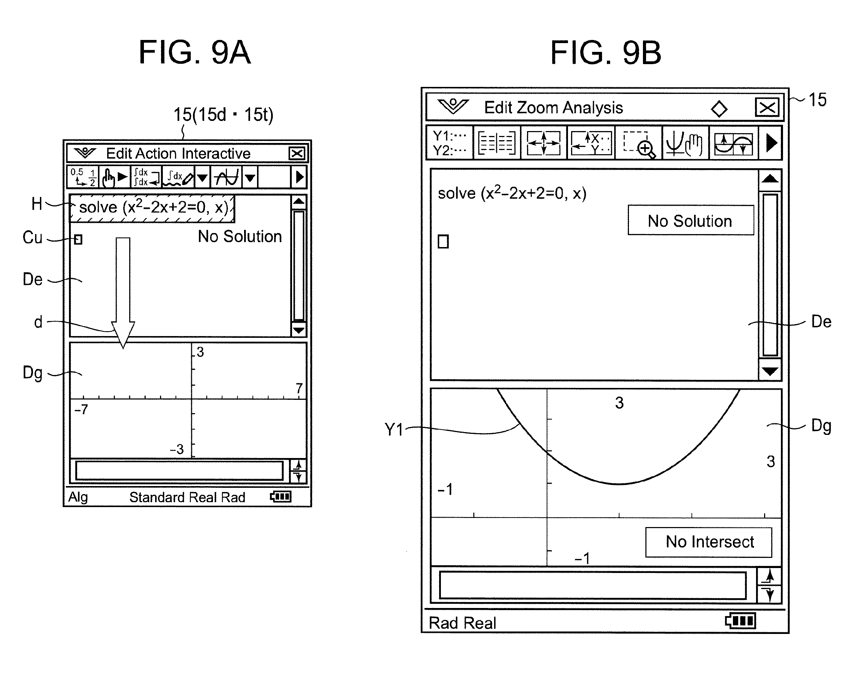

Figs. 9A and 9B show a linked display operation for the formula display area De and the graph display area Dg which is performed as part of graph forming processing when a high-order equation having no solution is input to the graphical scientific calculator 10.

If a quadratic equation "$x^2$ - 2x - 3 = 0, x" is input and displayed in the formula display area De of the touchscreen display unit 15 (see Fig. 8A) and the user drag-and-drops (as shown by an arrow "d") the quadratic equation into the graph display area Dg by a touch operation and a moving operation (step B2: yes), at step B12 intersections C as solutions of the quadratic equation are calculated.

If intersections C (x = -1, 3) of the quadratic equation and the X axis are calculated successfully (step B13: yes), at step B14 coordinate ranges Xmin[-2]~Xmax [4] and Ymin[-4]~Ymax[3] with which the coordinates of the intersections C (x = -1,3) are located at the center of the graph display area Dg are calculated and stored in the graph range memory 23e.

At step B9, graph data Y1 of the quadratic equation "$x^2$ - 2x - 3 = 0" is generated according to the coordinate ranges Xmin[-2]~Xmax[4] and Ymin[-4]~Ymax[3] which are stored in the graph range memory 23e. Furthermore, graph image data in which the coordinates "xc = -1, yc = 0" of the one intersection with the X axis which were calculated at step B12 and an intersection mark C are added are generated and drawn/stored in the graph display area memory 23b.

At step B 10, result display formula image data for display of a formula "y1 = x^2 - 2·x - 3" of the graph data Y1 corresponding to the equation that has been obtained in calculating a solution of the quadratic equation "$x^2$ - 2x - 3 = 0" is generated and drawn/stored in a bottom area of the graph display area memory 23b.

At step A6, as shown in Fig. 8B, the graph image data of the graph data Y1 of the quadratic equation and the formula image data Ga of the formula of the graph data Y1 which were generated at steps B9 and B10 and drawn/stored in the graph display area memory 23b are displayed in the graph display area Dg of the touchscreen display unit 15.

On the other hand, if "no solution" occurs, that is, if intersections C with the X axis as solutions of the quadratic equation are not found (step B12, steps B13: no) when a quadratic equation "$x^2$ - 2x + 2 = 0, x" (see Fig. 9A) has been input and displayed and drag-and-dropped (as shown by an arrow "d") into the graph display area Dg by a touch operation and a movement operation made by the user (step B2: yes), at step B15 coordinate ranges Xmin[-1]~Xmax[3] and Ymin[-1]~Ymax[3] with which a feature point (in this case, a minimum point) of the graph data Y1 of the equation can be displayed in the graph display area Dg are calculated and stored in the graph range memory 23e.

Then, step B9 for generating graph image data of the graph data Y1 of the equation and step B 10 for generating formula image data for display of a result (in this case, no formula image data are generated actually because there is no solution) are executed sequentially in the same manner as described above. At step A6, as shown in Fig. 9B, the graph image data of the graph data Y1 of the quadratic equation "$x^2$ - 2x + 2 = 0" having no solution is displayed in the graph display area Dg together with a message "No Intersect."

With the above procedure, the user can visually understand the mechanism of high-order equation calculation merely by a very simple operation of drag-and-dropping (as shown by an arrow "d") a user-input, desired high-order equation displayed in the formula display area De into the graph display area Dg in each of a case that the high-order equation has solution and a case that the high-order equation has no solution.

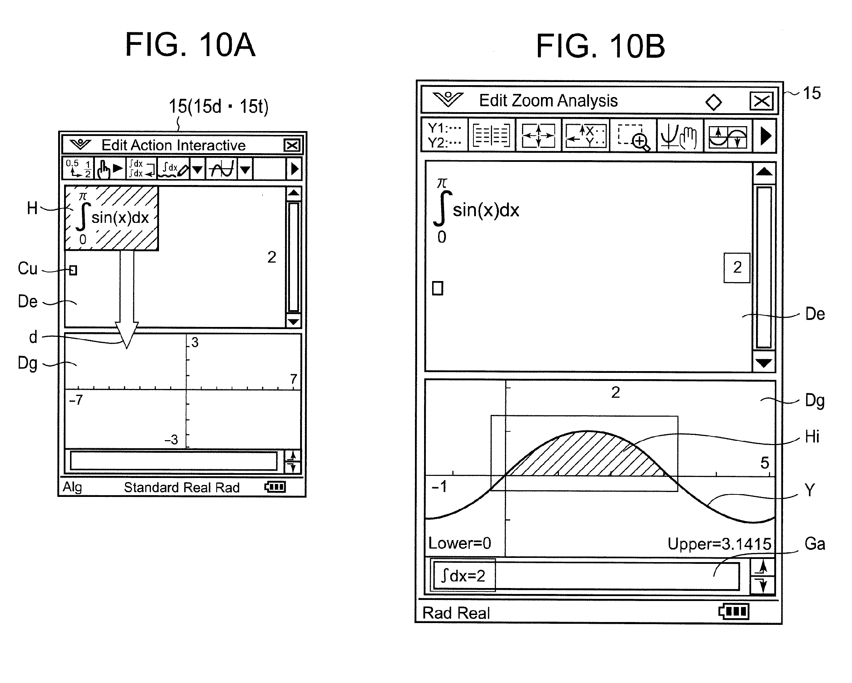

Figs. 10A and 10B show a linked display operation for the formula display area De and the graph display area Dg which is performed as part of graph forming processing when an integration function having a solution is input to the graphical scientific calculator 10.

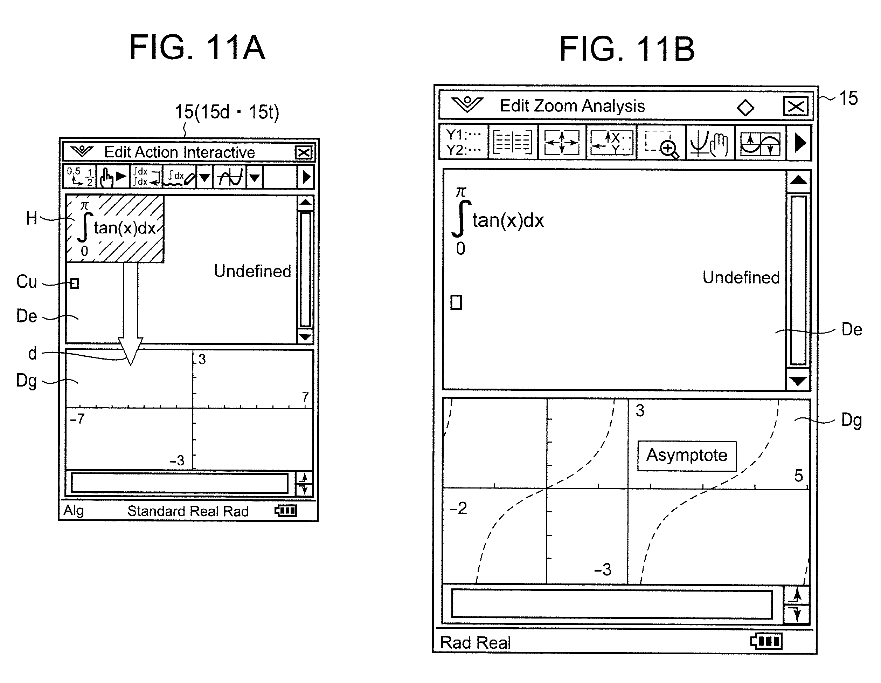

Figs. 11A and 11B show a linked display operation for the formula display area De and the graph display area Dg which is performed as part of graph forming processing when an integration function having no solution is input to the graphical scientific calculator 10.

If an integration function " $\int_0^\pi \sin(x)dx$ " is input and displayed in the formula display area De of the touchscreen display unit 15 (see Fig. 10A) and the user drag-and-drops (as shown by an arrow "d") the integration function into the graph display area Dg by a touch operation and a moving operation (step B3: yes), at step B16 a solution of the definite integral over the specified interval is calculated.

If a solution "2" of the definite integral is calculated successfully (step B 17: no), at step B18 coordinate ranges Xmin[-1]~Xmax[5] and Ymin[-1]~Ymax[2] with which the integration range 0 to $\pi$ is located at the center of the graph display area Dg are calculated and stored in the graph range memory 23e.

At step B9, graph data Y of the integration function " $\int_0^\pi \sin(x)dx$ " is generated according to the coordinate ranges Xmin[-1]~Xmax[5] and Ymin[-1]~Ymax[2] which are stored in the graph range memory 23e. Furthermore, graph image data in which area data of the definite integral whose solution was calculated at step B 16 and "Lower = 0" and "Upper = 3.1415" are added are generated and drawn/stored in the graph display area memory 23b.

At step B 10, result display formula image data for display of a calculation result formula "∫dx = 2" that has been obtained in calculating a solution of the integration function " $\int_0^\pi \sin(x)dx$ " is generated and drawn/stored in a bottom area of the graph display area memory 23b.

At step A6, as shown in Fig. 10B, the graph image data of the graph data Y of the integration function and the formula image data Ga of the integration result formula of the graph data Y which were generated at steps B9 and B10 and drawn/stored in the graph display area memory 23b are displayed in the graph display area Dg of the touchscreen display unit 15.

On the other hand, if a no-solution error "Undefined" occurs, that is, if the definite integral of the integration function can not be calculated (step B16, steps B 17: yes) when an integration function " $\int_0^\pi \tan(x)dx$ " (see Fig. 11A) has been input and displayed and drag-and-dropped (as shown by an arrow "d") into the graph display area Dg by a touch operation and a movement operation made by the user (step B3: yes), at step B19 an error indication of graph data including a discontinuous point of the integration function is generated and stored in the graph display area memory 23b. At step A6, as shown in Fig. 11B, the error indication of the graph data including the discontinuous point of the integration function " $\int_0^\pi \tan(x)dx$ " is displayed in the graph display area Dg of the touchscreen display unit 15 together with a discontinuous point message "Asymptote."

With the above procedure, the user can visually understand the mechanism of integration merely by a very simple operation of drag-and-dropping (as shown by an arrow "d") a user-input, desired integration function displayed in the formula display area De into the graph display area Dg in each of a case that the formula has a solution and a case that the formula has no solution.

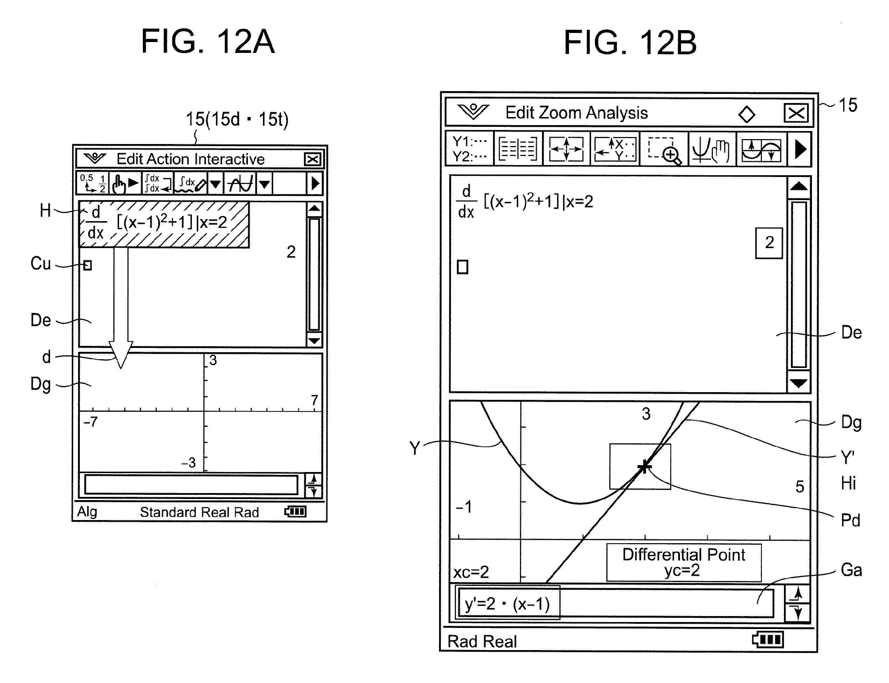

Figs. 12A and 12B show a linked display operation for the formula display area De and the graph display area Dg which is performed as part of graph forming processing when a differentiation function having a solution is input to the graphical scientific calculator 10.

If a differentiation function

$$ \text{``} \frac{d}{dx}[(x-1)^2 + 1] \mid x = 2 \text{''} $$ is input and displayed in the formula display area De of the touchscreen display unit 15 (see Fig. 12A) and the user drag-and-drops (as shown by an arrow "d") the differentiation function into the graph display area Dg by a touch operation and a moving operation (step B4: yes), at step B20 a solution (differential coefficient) of the differentiation function at the differentiation point (x = 2) is calculated.

If a value "2" of a derivative "y' = 2·(x - 1)" at the differentiation point "xc = 2, yc = 2" is calculated successfully (step B21: no), at step B22 coordinate ranges Xmin[-1]~Xmax[4] and Ymin[-1]~Ymax[3] with which the differentiation point and a feature portion of a graph showing the differentiation point and the differential coefficient at that point are located at the center of the graph display area Dg are calculated and stored in the graph range memory 23e.

At step B9, graph data Y of the differentiation

function $ \text{``} \frac{d}{dx}[(x-1)^2 + 1] \text{''} $ and graph data Y' of a tangential line "y' = 2·(x - 1)" at the differentiation point are generated according to the coordinate ranges Xmin[-2]~Xmax[4] and Ymin[-4]~Ymax[3] which are stored in the graph range memory 23e. Furthermore, graph image data in which the coordinates "xc = 2, yc = 2" of the differentiation point which were calculated at step B20 and a differentiation point mark Pd are added are generated and drawn/stored in the graph display area memory 23b.

At step B 10, result display formula image data for display of the derivative "y' = 2·(x - 1)" that has been obtained in calculating a solution of the differentiation

function $ \text{``} \frac{d}{dx}[(x-1)^2 + 1] \text{''} $ is generated and drawn/stored in a bottom area of the graph display area memory 23b.

At step A6, as shown in Fig. 12B, the graph image data of the graph data Y of the differentiation function and the graph data Y' of the tangential line at the differentiation point and the formula image data Ga of the derivative which were generated at steps B9 and B 10 and drawn/stored in the graph display area memory 23b are displayed in the graph display area Dg of the touchscreen display unit 15.

With the above procedure, the user can visually understand the mechanism of differentiation merely by a very simple operation of drag-and-dropping (as shown by an arrow "d") a user-input, desired differentiation function displayed in the formula display area De into the graph display area Dg.

At step B23, the graphical scientific calculator 10 can execute a linked process of solving calculation and graph drawing by inputting a function command and a related formula according to the same formula input process as described above for formulas including a minimum value function fMmin, a formula including a maximum value function fMmax, a formula including a dynamic variable, a normal distribution probability function, a normal distribution accumulated probability function, an inverse normal distribution accumulated probability function, a t-distribution probability function, a t-distribution accumulated probability function, a chi-square distribution probability function, a chi-square distribution accumulated probability function, a binomial distribution probability function, a binomial distribution accumulated probability function, a Poisson distribution probability function, a Poisson distribution accumulated probability function, a geometric distribution probability function, and a geometric distribution accumulated probability function in addition to a system of simultaneous equations, a high-order equation, an integration function, and a differentiation function (described above).

As described above, in the graphical scientific calculator 10, according to the function for performing a solving calculation and graph drawing in link with each other according to a function included in an input formula, a desired function formula is input and displayed in the formula display area De of the touchscreen display unit 15. When the function formula displayed in the formula display area De is drag-and-dropped into the graph display area Dg which is adjacent to the formula display area De, a solving calculation corresponding to the function command of the input formula is performed. Furthermore, coordinate ranges suitable for a calculation result are set and graph data corresponding to the formula are generated. And graph image data in which the position of a solution in the graph, an area or a range, a graph notation, and coordinates are added are displayed in the graph display area Dg. In this manner, it becomes possible to perform a solving calculation for a desired function formula and to draw and display a graph image that allows the user to visually understand a calculation result, by a very simple operation.

It is to be understood that the present invention is not limited to the specific embodiments described above and that the invention can be embodied with the components modified without departing from the spirit and scope of the invention. The invention can be embodied in various forums according to appropriate combinations of the components disclosed in the embodiments described above. For example, some components may be deleted from all components shown in the embodiments. Further, the components in different embodiments may be used appropriately in combination.

**Claims**

1. A graphing calculator comprising:

    a touchscreen display unit having a formula display area and a graph display area;
    a formula input section configured to receive a calculation formula including a function, the calculation formula being input by a user;
    a formula display control section configured to control the touchscreen display unit to display the calculation formula input to the formula input section in the formula display area;
    a formula drag determining section configured to determine whether the calculation formula displayed in the formula display area is dragged to the graph display area according to a user operation input to the touchscreen display unit;
    a function calculating section configured to perform a calculation corresponding to a type of the function included in the calculation formula when the formula drag determining section determines that the calculation formula is dragged to the graph display area;
    a range setting section configured to set coordinate ranges to be used for generating a graph image corresponding to the calculation formula and a calculation result obtained by the function calculating section; and
    a graph display control section configured to generate a graph image corresponding to the calculation formula and the calculation result according to the coordinate ranges set by the range setting section and to control the touchscreen display unit to display the graph image in the graph display area.

2. The calculator according to claim 1, wherein the formula input section receives the calculation formula together with a function command, and
    wherein the function calculating section performs the calculation corresponding to the type of the function of the calculation formula based on the function command input to the formula input section.

3. The calculator according to claim 2, wherein the calculation formula includes simultaneous equations,
    wherein the function calculating section performs a calculation for determining an intersection of loci of the simultaneous equations,
    wherein the range setting section sets coordinate ranges to be used for generating a graph image for displaying the loci of the simultaneous equations and the intersection, and
    wherein the graph display control section generates the graph image showing the loci of the simultaneous equations and the intersection using different line types for each of the loci and controls the touchscreen display unit to display the graph image in the graph display area.

4. The calculator according to claim 2, wherein the calculation formula includes a high-order equation,
    wherein the function calculating section performs a calculation for determining an intersection of a locus of the high-order equation and an x axis, and
    wherein the range setting section sets coordinate ranges to be used for generating the graph image for displaying the locus of the high-order equation and the intersection.

5. The calculator according to claim 2, wherein the calculation formula is an integration function,
    wherein the function calculating section performs a calculation for determining a definite integral of the integration function, and
    wherein the range setting section sets the coordinate ranges to be used for generating the graph image for displaying a locus of the integration function and an area of the definite integral.

6. The calculator according to claim 2, wherein the calculation formula includes a differentiation function,
    wherein the function calculating section performs a calculation for determining a differential coefficient of the differentiation function at a differentiation point, and
    wherein the range setting section sets the coordinate ranges to be used for generating the graph image for displaying a locus of the differentiation function and a locus of a tangential line to the differentiation function at the differentiation point.

7. A graphing calculator comprising:

    a touchscreen display unit configured to receive a touch operation input by a user, the touchscreen display having a formula display area and a graph display area;
    a user interface configured to receive a calculation formula including a function, the calculation formula being input by the user;
    a memory device configured to store instructions and data for performing a calculation for displaying a graph image of the calculation formula; and

a processor configured to:

control the touchscreen display unit to display the calculation formula in the formula display area;
perform the calculation in accordance with a type of the function included in the calculation formula;
set coordinate ranges to be used for generating a graph image of the calculation formula;
generate the graph image of the calculation formula based on the calculation and the coordinate ranges; and
control the touchscreen display unit to display the graph image in the graph display area when
the calculation formula displayed in the formula display area is dragged and dropped into the graph display area by the touch operation.

8. The calculator according to claim 7, wherein the processor operates to:

receive the calculation formula together with a function command input through the user interface; and
perform the calculation based on the function command.

9. The calculator according to claim 8, wherein the calculation formula includes simultaneous equations, and
wherein the processor operates to:

perform a calculation for determining an intersection of loci of the simultaneous equations;
set the coordinate ranges to be used for generating the graph image for displaying the loci of the simultaneous equations and the intersection;
generate the graph image showing the loci of the simultaneous equations and the intersection using different line types for each of the loci; and
control the touchscreen display unit to display the graph image in the graph display area.

10. The calculator according to claim 8, wherein the calculation formula includes a high-order equation, and
wherein the processor operates to:

perform a calculation for determining an intersection of a locus of the high-order equation and an x axis; and
set the coordinate ranges to be used for generating the graph image for displaying the locus of the high-order equation and the intersection.

11. The calculator according to claim 8, wherein the calculation formula includes an integration function, and wherein the processor operates to:

perform a calculation for determining a definite integral of the integration function; and
set the coordinate ranges to be used for generating the graph image for displaying a locus of the integration function and an area of the definite integral.

12. The calculator according to claim 8, wherein the calculation formula includes a differentiation function, and
wherein the processor operates to:

perform a calculation for determining a differential coefficient of the differentiation function at a differentiation point; and
set the coordinate ranges to be used for generating the graph image for displaying a locus of the differentiation function and a locus of a tangential line to the differentiation function at the differentiation point.

# FIG. 1

# FIG. 2

WEB SERVER ~27

N

TOUCHSCREEN DISPLAY UNIT ~15 { 15d / 15t

26

COMMUNICATION CONTROL INTERFACE

21

CPU

FORMULA DISPLAY AREA ~23a(De)

GRAPH DISPLAY AREA ~23b(Dg)

INPUT BUFFER ~23c

TOUCH COORDINATES ~23d

GRAPH RANGES ~23e

CALCULATION DATA (CALCULATION PROCESS, CALCULATION RESULT) ~23f

RAM ~23

24 ~ STORAGE MEDIUM INTERFACE

25 ~ STORAGE MEDIUM

11

USER INTERFACE

MEMORY DEVICE ~22

COMPUTER CONTROL PROGRAMS ~22a

# FIG. 3

```
FORMULA INPUT
PROCESS
    |
    v
INPUT TYPE OF FORMULA ~S1
    |
    v
INPUT FORMULA ~S2
    |
    v
INPUT NECESSARY
CONDITIONS ~S3
    |
    v
END
```

# FIG. 4

```
GRAPH FORMING
PROCESS
    |
    v
A1  FORMULA         NO
    TOUCHED? ----------+
    |                  |
    | YES              |
    v                  |
A2  DRAG & DROP?  NO      OTHER
    | ----------------->  PROCESSING
    | YES
    v
A3  WITHIN GRAPH  NO      OTHER
    DISPLAY AREA? ------> PROCESSING
    | YES
    v
ANALYZE FORMULA ~A4
    |
    v
DETERMINE FUNCTION TYPE ~A5
    |
    v
CALCULATION PROCESSING
CORRESPONDING TO FUNCTION ~AB
    |
    v
DISPLAY CALCULATION RESULT ~A6
    |
    v
END
```

# FIG. 5

PROCESS CORRESPONDING TO FUNCTION

B1 SIMULTANEOUS EQUATION? — NO

YES

B5 CALCULATE INTERSECTION

B6 INTERSECTION FOUND? — NO

YES

B7 CALCULATE DISPLAY RANGES WITH WHICH INTERSECTION IS LOCATED AT THE CENTER

B11 CALCULATE DISPLAY RANGES THAT ENABLE DISPLAY OF TWO EQUATIONS

B8 ASSIGN LINE TYPES TO INDIVIDUAL EQUATIONS

B9 GENERATE GRAPH IMAGE DATA

B10 GENERATE FORMULA IMAGE DATA FOR DISPLAYING RESULT

RETURN

B2 HIGH-ORDER EQUATION? — NO

YES

B12 CALCULATE INTERSECTIONS WITH X AXIS

B13 INTERSECTION(S) FOUND? — NO

YES

B14 CALCULATE DISPLAY RANGES WITH WHICH INTERSECTIONS ARE LOCATED AT THE CENTER

B15 CALCULATE DISPLAY RANGES THAT ENABLE DISPLAY OF GRAPH FEATURE

B3 INTEGRATION? — NO

YES

B16 CALCULATE DEFINITE INTEGRAL

B17 ERROR? — YES

NO

B18 CALCULATE DISPLAY RANGES THAT ENABLE DISPLAY OF INTEGRATION AREA

B4 DIFFERENTIATION? — NO

YES

B20 CALCULATE DIFFERENTIATION

B21 ERROR? — YES

NO

B22 CALCULATE DISPLAY RANGES THAT ENABLE DISPLAY OF GRAPH FEATURE

B19 GENERATE ERROR INDICATION

B23 PERFORM PROCESSING FOR OTHER FUNCTIONS

EP 2 131 288 A1

# FIG. 6A

15(15d・15t)

Edit Action Interactive

H

$2x+3y=7$
$4x-3y=5$ | x,y

$\{x=2, y=1\}$

Cu

De

d

Dg

3

−7

7

−3

Alg    Standard Real Rad

# FIG. 6B

Edit Action Interactive ~15

$2x+3y=7$
$4x-3y=5$

[ —— ]
[ •••••••• ]

x,y
$\{x=2, y=1\}$

L

De

Y1

3

Y2

Dg

5

C

−1

Intersect    Ga

$xc=2$    $yc=1$

$y1=-2/3 \cdot x+7/3$

Alg    Standard Real Rad

EP 2 131 288 A1

# FIG. 7A

15(15d · 15t)

Edit Action Interactive

$-5x^2+y=-1$

$4x-3y=5$    x,y

No Solution

H

Cu

De

d

Dg

3

7

-7

-3

Alg    Standard Real Rad

# FIG. 7B

15

Edit Zoom Analysis

Y1:···
Y2:···

$-5x^2+y=-1$

$4x-3y=5$    x,y

No Solution

De

1

Y1

Y2

-2

2

No intersect    Dg

-3

Ga

Rad Real

# FIG. 8A

15(15d · 15t)

Edit Action Interactive

H — solve (x²−2x−3=0, x)

{x=−1, x=3}

Cu

De

d

Dg

3

−7

7

−3

Alg    Standard Real Rad

# FIG. 8B

Edit Zoom Analysis    15

Y1:···
Y2:···

solve (x²−2x−3=0, x)

{x=−1, x=3}

De

Y1

C

3

−2

4

Dg

Intersect

xc=−1    yc=0

Ga

y1=x^2−2 · x−3

Rad Real

EP 2 131 288 A1

# FIG. 9A

15(15d · 15t)

H

Cu

De

d

Dg

## Edit Action Interactive

solve $(x^2-2x+2=0, x)$

No Solution

3

-7

7

-3

Alg    Standard Real Rad

# FIG. 9B

~15

## Edit Zoom Analysis

Y1:···
Y2:···

solve $(x^2-2x+2=0, x)$

No Solution

De

Dg

Y1

3

-1

3

-1

No Intersect

Rad Real

# FIG. 10A

15(15d · 15t)

Edit Action Interactive

$\begin{array}{c}0.5\;1\\2\end{array}$ ∫dx ∫dx

H

$\displaystyle\int_0^\pi \sin(x)dx$

2

Cu

De

d

Dg

3

-7

7

-3

Alg    Standard Real Rad

# FIG. 10B

Edit Zoom Analysis    15

Y1:···
Y2:···

$\displaystyle\int_0^\pi \sin(x)dx$

2

De

Dg

Hi

2

-1

5

Y

Lower=0    Upper=3.1415    Ga

∫dx=2

Rad Real

# FIG. 11A

15(15d · 15t)

Edit Action Interactive

H

$\int_0^\pi \tan(x)dx$

Cu

De

Undefined

d

Dg

3

-7

7

-3

Alg    Standard Real Rad

# FIG. 11B

15

Edit Zoom Analysis

Y1:···
Y2:···

$\int_0^\pi \tan(x)dx$

Undefined

De

Dg

3

Asymptote

5

-2

-3

Rad Real

EP 2 131 288 A1

# FIG. 12A

15(15d · 15t)

H

Cu

De

d

Dg

⌐
| ▽ | Edit Action Interactive | ⊠ |

$\frac{d}{dx}[(x-1)^2+1]|x=2$

2

3

7

-7

-3

Alg    Standard Real Rad

# FIG. 12B

15

⌐
| ▽ | Edit Zoom Analysis | ◇ | ⊠ |

Y1:···
Y2:···

$\frac{d}{dx}[(x-1)^2+1]|x=2$

2

□

De

Dg

Y

Y'

Hi

Pd

3

-1

5

Differential Point
yc=2

xc=2

$y'=2 \cdot (x-1)$

Ga

Rad Real

EP 2 131 288 A1

Europäisches
Patentamt

European
Patent Office

Office européen
des brevets

## EUROPEAN SEARCH REPORT

Application Number

EP 09 16 1884

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 7 289 120 B2 (FUKAYA HIDESHI [JP]; MIDOROGI SATOMI [JP]; IGUSA MANABU [JP] FUKAYA) 30 October 2007 (2007-10-30)<br>* column 8 *<br>* column 10 *<br>* column 12 *<br>* column 20 *<br>----- | 1-12 | INV.<br>G06F15/02<br>G06T11/20<br><br>ADD.<br>G06F3/048 |
| Y | JP 2003 150562 A (CASIO COMPUTER CO LTD) 23 May 2003 (2003-05-23)<br>* paragraphs [0060] - [0063] *<br>----- | 1-12 | |

TECHNICAL FIELDS
SEARCHED    (IPC)

G06F
G06T

The present search report has been drawn up for all claims

| Place of search | Date of completion of the search | Examiner |
|---|---|---|
| Munich | 2 October 2009 | Kamps, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 16 1884

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2009

| Patent document cited in search report | | Publication date | Patent family member(s) | | Publication date |
|---|---|---|---|---|---|
| US 7289120 | B2 | 30-10-2007 | EP<br>WO<br>TW<br>US<br>US | 1556774 A2<br>2004029788 A2<br>243316 B<br>2007188496 A1<br>2004223002 A1 | 27-07-2005<br>08-04-2004<br>11-11-2005<br>16-08-2007<br>11-11-2004 |
| JP 2003150562 | A | 23-05-2003 | NONE | | |

EPO FORM P0459

For more details about this annex : see Official Journal of the European Patent Office, No. 12/82

## REFERENCES CITED IN THE DESCRIPTION

### Patent documents cited in the description

* JP 2008148280 A
* JP 2004126679 A

* JP 2004126769 A